# EUROPEAN PATENT APPLICATION

(11) **EP 4 052 901 A1**
(43) Date of publication of application: **07.09.2022**
(21) Application number: 20882166.0
(22) Date of filing: 29.10.2020
(51) Int. Cl.: B32B 27/00, G02B 5/02, G09F 9/00

(54) **DISPLAY DEVICE**

(30) Priority: 31.10.2019 JP 2019199007
(71) Applicant: Panasonic Intellectual Property Management Co., Ltd., Osaka-shi, Osaka 540-6207 (JP)
(72) Inventor: ARAYA, Jun, Osaka-shi, Osaka 540-6207 (JP); SHIBATA, Masaomi, Osaka-shi, Osaka 540-6207 (JP)
(74) Representative: Novagraaf International SA
(86) International application number: PCT/JP2020/040592
(87) International publication number: WO 2021/085524

(57) **Abstract**

A display device (1) to be attached to an object includes: a display unit (10) that includes a display surface and displays video on the display surface (10a); a decorative layer (22) that is light-transmissive and disposed on a display surface side of the display unit (10), the decorative layer (22) being decorated according to an appearance of the object; and an intermediate layer that is light-transmissive and disposed between the display unit (10) and the decorative layer (22). The decorative layer (22) has a first haze value ranging from 28.4% to 86.3%, inclusive.

## Description

### [Technical Field]

The present disclosure relates to a display device.

### [Background Art]

For display devices such as liquid crystal displays, providing a decorative sheet with a decorative layer on a display surface of a display device to give a designability has been studied. If a pattern that is harmonious with a space where a display device is placed is applied to a decorative layer, the display device is capable of being blended with the space. For example, Patent Literature (PTL) 1 discloses a decorative sheet provided with light-transmissive portions through which light of an image from a display device passes.

### [Citation List]

### [Patent Literature]

[PTL 1] Japanese Unexamined Patent Application Publication No. 2019-120833

### [Summary of Invention]

### [Technical Problem]

Provision of a decorative layer on a display surface of a display device involves a problem in which an image quality of a video displayed by the display device is degraded as compared with a case where the decorative layer is not included. For example, the decorative layer diffuses light received from the display device, which may cause a blurred video to be displayed.

The present disclosure therefore provides a display device including a decorative layer, the display device being capable of preventing degradation in quality of an image displayed.

### [Solution to Problem]

In accordance with an aspect of the present disclosure, a display device to be attached to an object includes: a display unit that includes a display surface and displays video on the display surface; a decorative layer that is light-transmissive and disposed on a display surface side of the display unit, the decorative layer being decorated according to an appearance of the object; and an intermediate layer that is light-transmissive and disposed between the display unit and the decorative layer, wherein the decorative layer has a first haze value ranging from 28.4% to 86.3%, inclusive.

### [Advantageous Effects of Invention]

With a display device according to an aspect of the present disclosure, it is possible to prevent degradation in quality of an image displayed in the display device including a decorative layer.

### [Brief Description of Drawings]

[FIG. 1] FIG. 1 is an exploded perspective view schematically illustrating an example of a schematic configuration of a display device according to Embodiment 1.
[FIG. 2] FIG. 2 is a cross-sectional view schematically illustrating a cross-sectional configuration of the display device according to Embodiment 1.
[FIG. 3] FIG. 3 is a block diagram illustrating a functional configuration of the display device according to Embodiment 1.
[FIG. 4] FIG. 4 is an exploded perspective view schematically illustrating another example of the schematic configuration of the display device according to Embodiment 1.
[FIG. 5] FIG. 5 is a diagram illustrating results of verification for the display device according to Embodiment 1.
[FIG. 6A] FIG. 6A is a diagram for describing a non-display mode of the display device according to Embodiment 1 in an application example.
[FIG. 6B] FIG. 6B is a diagram for describing a display mode of the display device according to Embodiment 1 in the application example.
[FIG. 7] FIG. 7 is an exploded perspective view schematically illustrating an example of a schematic configuration of a display device according to Embodiment 2.
[FIG. 8] FIG. 8 is a cross-sectional view schematically illustrating a cross-sectional configuration of the display device according to Embodiment 2.
[FIG. 9] FIG. 9 is a diagram illustrating results of verification for the display device according to Embodiment 2.
[FIG. 10A] FIG. 10A is a diagram for describing the non-display mode of the display device according to Embodiment 2 in an application example.
[FIG. 10B] FIG. 10B is a diagram for describing the display mode of the display device according to Embodiment 2 in the application example.

### [Description of Embodiments]

Hereinafter, certain exemplary embodiments will be described in detail with reference to the accompanying Drawings. The following embodiments are general or specific examples of the present disclosure. The numerical values, shapes, materials, elements, arrangement and connection configuration of the elements, steps, the order of the steps, etc., described in the following embodiments are merely examples, and are not intended to limit the present disclosure. Among elements in the following embodiments, those not described in any one of the independent claims indicating the broadest concept of the present disclosure are described as optional elements.

It should be noted that the respective figures are schematic diagrams and are not necessarily precise illustrations. Additionally, components that are essentially the same share like reference signs in the figures. Accordingly, overlapping explanations thereof are omitted or simplified.

It should be noted that, in the present description, terms each indicating a relationship between components, such as "parallel" and terms each indicating a shape of a component, such as "rectangular" as well as numerical ranges are not expressions that express only stringent meanings but expressions each include a margin that is considered to be substantially the same, such as a discrepancy on the order of several percent.

### (Embodiment 1)

### [1-1. Configuration]

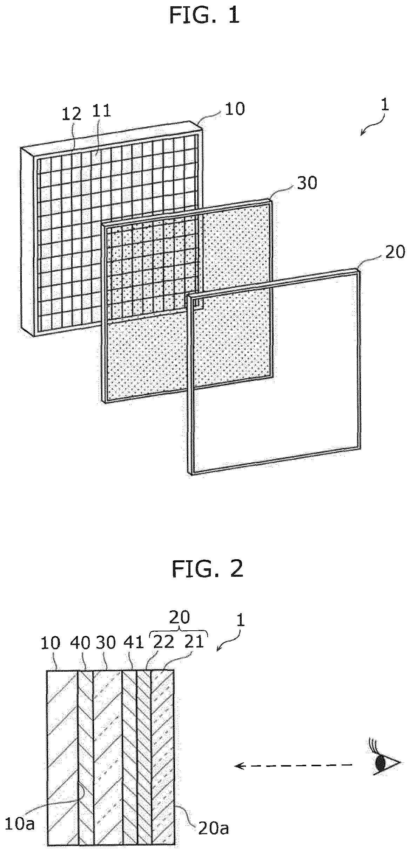

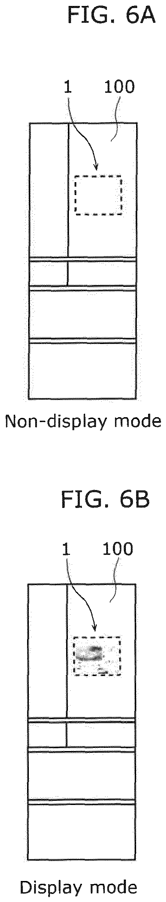

First, a configuration of display device 1 according to the present embodiment will be described with reference to FIG. 1 to FIG. 4. Display device 1 is, for example, to be attached to an object when used. Display device 1 is, for example, an embedded display device to be embedded in the object. Here will be described an example in which the object is a structure (white wall), but the object is not limited to the structure; for example, the object may be an electrical appliance (e.g., see refrigerator 100 illustrated in FIGs. 6A and 6B).

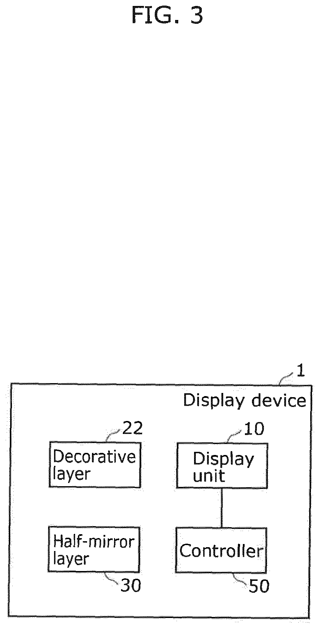

FIG. 1 is an exploded perspective view schematically illustrating a schematic configuration of display device 1 according to the present embodiment. FIG. 2 is a cross-sectional view schematically illustrating a cross-sectional configuration of display device 1 according to the present embodiment. FIG. 3 is a block diagram illustrating a functional configuration of display device 1 according to the present embodiment. It should be noted that FIG. 1 illustrates, of constituent components included in display device 1, only display unit 10, decorative sheet 20, and half-mirror layer 30.

As illustrated in FIG. 1 to FIG. 3, display device 1 includes display unit 10, decorative sheet 20, half-mirror layer 30, bonding layers 40 and 41, and controller 50. In addition, as illustrated in FIG. 1 and FIG. 2, display unit 10, half-mirror layer 30, and decorative sheet 20 are disposed in this order. Specifically, half-mirror layer 30 and decorative sheet 20 are disposed in this order and parallel to each other on a display surface 10a side of display unit 10. It is only required that, of the constituent components of display device 1, at least display unit 10 be embedded in the object. It should be noted that "being embedded" means that at least display unit 10 is positioned inside the object. In addition, display device 1 is disposed being embedded in the object such that a user can visually recognize decorative sheet 20.

Display unit 10 includes display surface 10a and displays a video on display surface 10a. Display unit 10 is, for example, but not limited to, a liquid crystal display or an organic electroluminescence (EL) display. In a case where, for example, luminance of a video to be displayed by display device 1 is to be increased, display unit 10 may be a light-emitting diode (LED) display. It should be noted that video includes still images and movies.

Decorative sheet 20 is provided so as to hide (conceal) display device 1 being embedded in the object. Decorative sheet 20 is light-transmissive, is disposed on the display surface 10a side of display unit 10, and is decorated, for example, according to an appearance of the object. The decoration is applied to the entire decorative sheet 20 but may be applied partly. Decorative sheet 20 is provided, for example, such that both display region 11 that displays a video on display unit 10 and periphery region 12 in which an accompanying element such as a wiring pattern is provided are covered with decorative sheet 20. The decoration applied to decorative sheet 20 may be applied to, for example, both display region 11 and periphery region 12 or may be applied to only one of display region 11 and periphery region 12 (e.g., only display region 11). In addition, there may be two or more decorative patterns to be applied to decorative sheet 20. Decorative sheet 20 may be formed with different decorative patterns for display region 11 and periphery region 12. The appearance of the object includes, for example, a pattern, a color tone, a shine, a texture, and the like of the object. The appearance of the object may additionally include a surface shape of the object. It should be noted that the decorative pattern herein includes a solid decoration (e.g., a white decoration).

The decoration applied to decorative sheet 20 is preferably a decoration that makes display device 1 and the object appear integral in a state where display device 1 is embedded in the object, for example (e.g., presence of display device 1 is hard to be visually recognized when display device 1 does not display a video). In addition, for example, the decoration applied to decorative sheet 20 is preferably a decoration that is harmonious with an interior of a room where the object is placed. For example, in a case where the object is a wall and where display device 1 is embedded in the wall, such decoration may be a decoration that makes display device 1 appear as the wall when the wall is seen with display unit 10 not displaying a video. In the present embodiment, the object is a white wall, and therefore, for example, decorative sheet 20 is decorated in the white. For example, in a case where the object is a wall and where display device 1 is embedded in the wall, such decoration may be a decoration that makes display device 1 appear as if the wall is ornamented with a painting when the wall is seen with display unit 10 not displaying a video. That is, a decoration that looks like a painting may be applied to decorative sheet 20. This is also an example of a decoration that is harmonious with an interior.

For example, decorative sheet 20 is disposed in the foreground of display device 1. A user visually recognizes decorative sheet 20 with display device 1 being embedded in the object.

As illustrated in FIG. 2, decorative sheet 20 includes substrate 21 and decorative layer 22. It should be noted that although FIG. 1 and FIG. 2 illustrate a case where a size of decorative sheet 20 in plan view (when seen from a direction of a line of sight illustrated in FIG. 2) is as large as that of display unit 10, the size of decorative sheet 20 is not limited to this case. For example, decorative sheet 20 may be larger than display unit 10 in plan view.

Substrate 21 is a layer serving as a base of decorative sheet 20 and is formed from a light-transmissive resin material, a glass material, or the like. For example, substrate 21 is preferably transparent. In a case where substrate 21 is formed from such a resin material, substrate 21 may be formed from, for example, polyethylene terephthalate (PET), polycarbonate (PC), polymethyl methacrylate (PMMA/acrylic resin), or the like.

Substrate 21 has, for example, a flat shape but may have a shape that is in conformity with a surface shape of the object. For example, in a case where a surface of the object is a projection-depression shape, substrate 21 may have the projection-depression shape.

Decorative layer 22 is a decorative pattern layer that is formed from a material such as paint and a transparent-resin-based ink containing pigment. At least part of decorative layer 22 is provided on an optical path of light emitted from display unit 10. Decorative layer 22 is provided by forming a decorative pattern on one or both surfaces of substrate 21 with the material by printing or the like. Examples of a method for the printing include, but not limited to, screen printing. It should be noted that decorative layer 22 is light-transmissive. In addition, the transmissivity of decorative layer 22 is lower than the transmissivity of substrate 21, for example.

A decorative pattern that forms decorative layer 22 is determined as appropriate according to an appearance of the object in which display device 1 is to be embedded. For example, the decorative pattern preferably has a color tone or a pattern that is the same as a color tone or a pattern of the object in which display device 1 is to be embedded. For example, the decorative pattern may be monochromatic (e.g., white) or may have a wood-grain tone, a stone-grain tone, or the like.

Although decorative layer 22 is formed on a surface of substrate 21 on a display unit 10 side (back surface) in the present embodiment, this does not limit the formation of decorative layer 22; it is only required that decorative layer 22 be formed on at least one of the back surface of substrate 21 and a surface that is back-to-back with the back surface (e.g., front surface 20a).

Front surface 20a is, for example, disposed to be flush with a surface of the object. For example, in a case where decorative layer 22 is formed on front surface 20a of substrate 21, display device 1 may be attached being embedded in the object such that decorative layer 22 is flush with the surface of the object. Front surface 20a is, for example, an outermost surface of display device 1.

It should be noted that decorative sheet 20 may be formed of a colored film or colored glass. Substrate 21 formed of the colored film or the colored glass is formed by kneading pigment or dye into a substrate or the like. Substrate 21 formed of the colored film is made of resin, and substrate 21 formed of the colored glass is made of glass. In a case where substrate 21 is a colored film or colored glass, the decorative pattern may be provided by substrate 21 itself. Further, in a case where substrate 21 is a colored film or colored glass, decorative layer 22 may be further formed on substrate 21 by printing or the like.

As compared with a case where display device 1 does not include half-mirror layer 30, a higher transmittance can be set to decorative sheet 20. The transmittance of decorative sheet 20 ranges from 20% to 80%, but the transmittance is not limited to the range; for example, the transmittance may range from 20% to 50%. It should be noted that the transmittance herein means total transmittance.

It should be noted that decorative layer 22 need not be a printed layer provided by forming a decorative pattern by printing or the like and may be a projection-depression layer formed by embossing or the like or may include the printed layer and the projection-depression layer. At least one of the printed layer and the projection-depression layer is to be selected as appropriate according to the appearance or the like of the object to which display device 1 is to be attached. Further, decorative sheet 20 may be formed including, for example, a thin slice of wood (e.g., sliced veneer) or stones.

Half-mirror layer 30 is a layer that is provided between display unit 10 and decorative layer 22 and is light-transmissive. Half-mirror layer 30 is provided so as to emphasize the pattern (design) of decorative layer 22 in a state where display unit 10 does not display a video (in a state of a non-display mode, which will be described later). For example, in a case where decorative layer 22 is decorated in white, the white decoration can be caused to appear more deeply (whiter) by provision of half-mirror layer 30. The provision of half-mirror layer 30 enables a pattern having a desired depth (e.g., a desired whiteness) to be provided even if the transmittance of decorative layer 22 is high in a state where display unit 10 does not display a video. This allows a depth of decorative layer 22 to be lowered; it is therefore possible to keep a degree of optical diffusion by decorative layer 22 low and to provide a pattern having a desired depth. It should be noted that the desired depth is a depth to a degree that the pattern is blended with the interior.

Half-mirror layer 30 is provided by forming, for example, a metallic film or a resin multilayer film (transparent multilayer film) on a substrate. For example, in a case where half-mirror layer 30 is formed with a metallic film, the metallic film is formed by subjecting aluminum, silver, tin, or the like to vapor deposition. An optical reflectance of half-mirror layer 30 ranges from 25% to 70%, inclusive. Further, half-mirror layer 30 preferably has no diffusibility (optical diffusibility), from a viewpoint of making a video clear. It should be noted that having no diffusibility herein includes having a diffusibility to such a degree that the diffusibility has no influence on a clarity of a video displayed by display unit 10. Having no diffusibility includes, for example, having a haze value on the order of several percent.

Half-mirror layer 30 is an example of an intermediate layer. It should be noted that half-mirror layer 30 may be a polarizing half-mirror layer. The polarizing half-mirror layer includes, for example, half-mirror layer 30 and a thin film layer that is formed on a surface of half-mirror layer 30 on a decorative sheet 20 side. A refractive index of the thin film layer is different from a refractive index of half-mirror layer 30. The thin film layer has such a refractive index and such a thickness that can reduce a strength of reflected light with respect to incident light from the decorative sheet 20 side at the polarizing half-mirror layer. By the use of the polarizing half-mirror layer, it is possible to allow light received from display unit 10 to pass more than half-mirror layer 30 while preserving a reflective performance of half-mirror layer 30 for light received from the decorative sheet 20 side.

Here, the reason that the provision of half-mirror layer 30 enables the transmittance of decorative layer 22 to be set to a high transmittance and enables the haze value to be set a low haze value will be described with reference to a display device without half-mirror layer 30 as a comparative example. In the display device according to the comparative example, if a transmittance of decorative layer 22 is increased, a luminance value of a video increases, improving an image quality of the video, whereas an appearance (e.g., texture) of decorative layer 22 at the time when no video is displayed is degraded. On the other hand, if the transmittance of decorative layer 22 is decreased in the display device according to the comparative example, the appearance of decorative layer 22 at the time when no video is displayed is improved, whereas a luminance value of a video decreases, degrading the image quality of the video. As above, it is difficult for the display device according to the comparative example to establish compatibility between increasing the transmittance of decorative layer 22 and preventing the degradation in the appearance of decorative layer 22.

In contrast, including half-mirror layer 30, display device 1 according to the present embodiment can compensate for the degradation in the appearance of decorative layer 22 caused by increasing the transmittance of decorative layer 22. When not displaying a video, display device 1 shows the pattern of decorative layer 22 using natural light that is incident on display device 1 and reflected off decorative layer 22 and natural light that is incident on display device 1, is reflected off half-mirror layer 30, and passes through decorative layer 22. That is, the presence of half-mirror layer 30 enables the pattern to stand out in relief. For example, the presence of half-mirror layer 30 enables colored portions to stand out in relief.

Display device 1 is therefore capable of preventing the degradation in the appearance of decorative layer 22 in a case where the transmittance of decorative layer 22 is increased. That is, display device 1 can establish the compatibility between increasing the transmittance of decorative layer 22 and preventing the degradation in the appearance of decorative layer 22.

Further, the transmittance of decorative layer 22 can be adjusted based on, for example, a content of fine-particle material such as pigment (e.g., white pigment) to be dissolved in a solvent for forming of decorative layer 22. For example, the transmittance of decorative layer 22 can be increased by reducing the content of the pigment or the like to be dissolved in the solvent. Here, a haze value of decorative layer 22 varies with the content of the fine-particle material; for example, if the content of the fine-particle material is reduced, fine particles that cause diffusion of light are reduced, and therefore, the haze value of decorative layer 22 is decreased. That is, with half-mirror layer 30, display device 1 is capable of increasing the transmittance of decorative layer 22 as well as decreasing the haze value of decorative layer 22. Display device 1 is therefore capable of, when not displaying a video, preventing the degradation in the appearance of decorative layer 22 and capable of, when displaying a video, displaying the video clearly with reduced blurring. In addition, although including half-mirror layer 30, display device 1 is capable of preventing a decrease in luminance value of a video.

It should be noted that since half-mirror layer 30 has no diffusibility as described above, it is possible to provide the above-described effect while preventing a video and decorative layer 22 from appearing blurred.

Bonding layer 40 is a bonding member for sticking display unit 10 and half-mirror layer 30 together. Bonding layer 41 is a bonding member for sticking half-mirror layer 30 and decorative sheet 20 together. Bonding layers 40 and 41 are formed from a bonding member having a high transparency such as an optical clear adhesive (OCA). Further, it is preferable to select, as bonding layers 40 and 41, those having refractive indices that are close to refractive indices of transparent base plate included in display unit 10 and half-mirror layer 30. Further, bonding layers 40 and 41 preferably have a low diffusibility from the viewpoint of preventing a degradation in image quality and preventing the degradation in the appearance of decorative layer 22 when a video is not displayed. For example, bonding layers 40 and 41 preferably have no diffusibility. It should be noted that having no diffusibility herein includes having no diffusibility as well as having a diffusibility to such a degree that the diffusibility has no influence on image quality and the appearance of decorative layer 22. Having no diffusibility includes, for example, having a haze value on the order of several percent.

It should be noted that in a case where one of display unit 10 and half-mirror layer 30 has a bonding layer, bonding layer 40 need not be provided. In a case where one of half-mirror layer 30 and decorative sheet 20 has a bonding layer, bonding layer 41 need not be provided. Further, for example, in a case where display device 1 includes a holder or the like that fixes display unit 10, half-mirror layer 30, and decorative sheet 20 in this order, bonding layers 40 and 41 need not be provided. In a case where bonding layers 40 and 41 are not provided, at least one of display unit 10 and half-mirror layer 30, and half-mirror layer 30 and decorative sheet 20 may be disposed being brought into direct contact with each other.

For example, decorative layer 22 and half-mirror layer 30 are directly stuck together via bonding layer 41. For example, display device 1 includes no diffusion layer between decorative layer 22 and half-mirror layer 30. It should be noted that even in a case where decorative layer 22 is formed on front surface 20a of substrate 21, display device 1 preferably includes no diffusion layer between decorative layer 22 and half-mirror layer 30.

In display device 1 with this configuration, light emitted from display unit 10 (light of a video) is diffused by decorative layer 22 (e.g., by only decorative layer 22); therefore, it is possible to prevent a displayed video from blurring, that is, prevent a degradation in image quality, as compared with a case where a diffusion layer is included (a case where light of a video is diffused by the diffusion layer).

Further, display device 1 is further capable of preventing the degradation in the appearance of decorative layer 22 when a video is not displayed. The degradation in the appearance of decorative layer 22 refers to that, for example, the design of decorative layer 22 becomes unclear (appears blurred). Natural light incident from the outside of display device 1 passes through decorative sheet 20, is reflected off half-mirror layer 30, passes through decorative sheet 20 again, and is then emitted to the outside of display device 1.

At this time, the natural light passes through decorative sheet 20 twice, is diffused in accordance with the haze value of decorative layer 22, and is emitted. For example, in a case where display device 1 includes a diffusion layer between decorative layer 22 and half-mirror layer 30, natural light additionally passes through the diffusion layer twice, is diffused in accordance with the haze value of decorative layer 22 and a haze value of the diffusion layer, and is emitted, which tends to make the design of decorative layer 22 unclear. In contrast, since display device 1 according to the present embodiment includes no diffusion layer between decorative layer 22 and half-mirror layer 30, it is possible to prevent the design of decorative layer 22 from becoming unclear, as compared with a case where a diffusion layer is included.

Controller 50 is a control device that controls components included in display device 1. Specifically, controller 50 controls display unit 10 to switch between a non-display mode of causing display unit 10 not to display a video to let a user see the decoration of decorative sheet 20 and a display mode of causing display unit 10 to display a video. The non-display mode is, for example, a mode for making display device 1 harmonious with the object (e.g., a wall) at which display device 1 is provided. Controller 50 includes, for example, an input device (not illustrated) that receives an operation by a user, and the above-described control may be performed according to the operation by the user obtained with an input device.

Controller 50 is a microcomputer but may be implemented in a form of a dedicated circuit or the like. Controller 50 reads a control program from a storage built in controller 50 and executes the program read.

A luminance value of a video that is displayed by display device 1 configured as described above is determined from a luminance value of the video at display unit 10, a transmittance of half-mirror layer 30, and the transmittance of decorative sheet 20. The luminance value of the video displayed by display device 1 is preferably at least 100 nits. In other words, it is preferable to determine the transmittances of decorative sheet 20 and half-mirror layer 30 and determine the luminance value of light of a video emitted from display unit 10 so that the luminance value of the video displayed by display device 1 becomes at least 100 nits. It should be noted that the luminance value refers to a maximum value of luminance of the video displayed by display device 1; however, the luminance value is not limited to such a maximum value. The luminance value may be a statistical value such as a minimum value, an average value, or a median of the video displayed by display device 1.

It should be noted that FIG. 1 illustrates display unit 10, decorative sheet 20, and half-mirror layer 30 having rectangular shapes as an example; however, the shapes of display unit 10, decorative sheet 20, and half-mirror layer 30 are not limited to rectangular shapes. The shapes of display unit 10, decorative sheet 20, and half-mirror layer 30 may be, for example, polygonal or circular. Further, FIG. 1 illustrates display unit 10, decorative sheet 20, and half-mirror layer 30 having the same size (the size in plan view) as an example; however, the sizes of display unit 10, decorative sheet 20, and half-mirror layer 30 are not limited to this example.

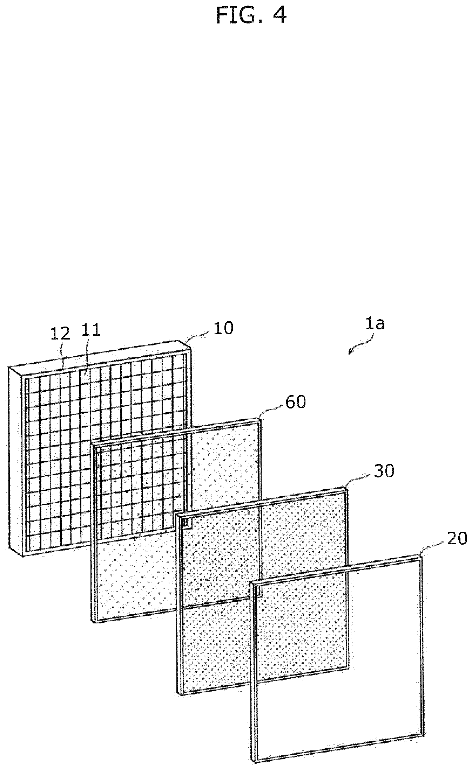

Here, another configuration of the display device will be described with reference to FIG. 4. FIG. 4 is an exploded perspective view schematically illustrating another example of a schematic configuration of display device 1a according to the present embodiment.

As illustrated in FIG. 4, display device 1a includes, in addition to display device 1, polarizing half-mirror layer 60 between display unit 10 and half-mirror layer 30. That is, display device 1a includes both half-mirror layer 30 and polarizing half-mirror layer 60 between display unit 10 and decorative sheet 20. In this case, half-mirror layer 30 and polarizing half-mirror layer 60 are each an example of an intermediate layer. It should be noted that positions of half-mirror layer 30 and polarizing half-mirror layer 60 are not limited to positions illustrated in FIG. 4 as long as half-mirror layer 30 and polarizing half-mirror layer 60 are disposed between display unit 10 and decorative sheet 20. Further, half-mirror layer 30 may be provided in a case where polarizing half-mirror layer 60 cannot solely conceal display device 1.

### [1-2. Relation between optical properties of decorative sheet and appearance of display device]

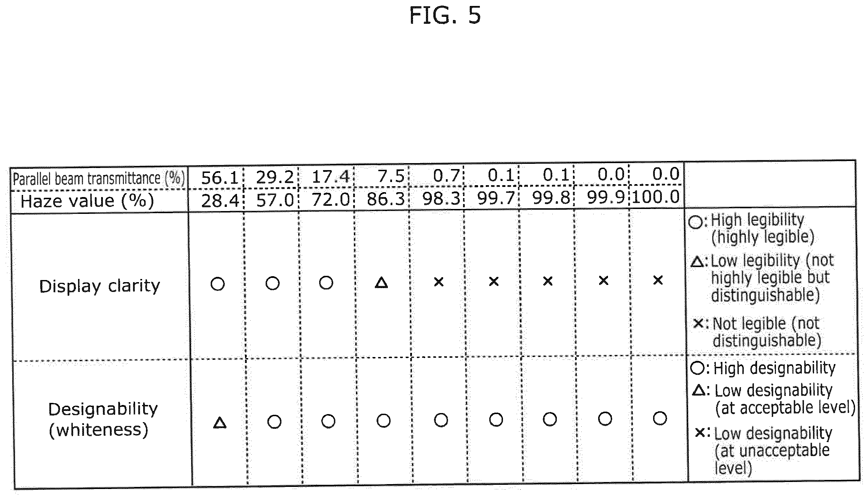

Next, results of verification about a relation between optical properties of decorative sheet 20 and an appearance of display device 1 will be described with reference to FIG. 5. FIG. 5 is a diagram illustrating the results of the verification for display device 1 according to the present embodiment. Specifically, FIG. 5 is a diagram illustrating results of verification about a relation between haze value and parallel beam transmittance of decorative sheet 20, and display clarity and designability (whiteness).

First, conditions for the verification of the relation between optical properties of decorative sheet 20 and the appearance of display device 1 will be described. Display device 1 used for the verification is a display device in which decorative layer 22 is decorated in white and that includes half-mirror layer 30 as an intermediate layer. Half-mirror layer 30 has a transmittance of 30% and a reflectivity of 70%. Substrate 21 of decorative sheet 20 has a thickness of 2 mm, and decorative layer 22 is provided on a back surface of substrate 21. Half-mirror layer 30 is disposed on (being in contact with) decorative layer 22. Further, display unit 10 has a size of 31 inch and a resolution of 4K (4096×2160). In addition, a luminance of display device 1 when display device 1 displays full-screen white is set to 1000 nits.

Verification by an observer is conducted at a position 0.5 m away from display device 1 in a room where a fluorescent lamp is lit. The fluorescent lamp emits light that gives an illuminance of about 100 Ix at front surface 20a of display device 1. The verification by an observer is verification of display clarity and designability and is conducted in a form of visual check.

Parallel beam transmittances shown in FIG. 5 are each a parallel beam transmittance of decorative sheet 20. The parallel beam transmittances each indicate, for example, a ratio of light emitted in a direction perpendicular to a surface of decorative sheet 20 to light incident on decorative sheet 20. In other words, the parallel beam transmittances each indicate a ratio of light passing through decorative sheet 20 and not diffused within decorative sheet 20 to light incident on decorative sheet 20. The parallel beam transmittances serve as an index that indicates a brightness of a video displayed by display device 1. The haze values in the figure each indicate a haze value of decorative sheet 20. It should be noted that the parallel beam transmittances and the haze values are measured with a haze meter.

Display clarity indicates a clarity of display when display device 1 operates in the display mode. The display clarity can be regarded as indicating a degree of blurring of the display. That is, verification of the display clarity is conducted in the display mode. Display unit 10 displays a bar display (video) in which color bars are displayed against a white background and displays a character display in which black characters from 8 points to 20 points are displayed. For example, conditions for the character display such as sizes of the characters may be determined based on JIS S 0032 (Estimation of minimum legible size for a Japanese single character). The observer checks the bar display and the character display and determines whether the displays are clear (whether the displays are not blurred).

Results of the verification of the display clarity are rated as "○", "△", and "×". The mark "O" indicates that the displays have a high legibility (e.g., the characters are highly legible). That is, the mark means that the displays are clear. The mark "△" indicates that the displays have a low legibility (e.g., the characters are not highly legible but distinguishable). That is, the mark means that the displays are clear to some degree. The marks "○" and "△" mean that the displays are legible. The mark "×" indicates that the displays are not legible (not distinguishable). That is, the mark means that the displays are unclear.

The designability (whiteness) indicates an appearance when display device 1 is in the non-display mode. The designability can be regarded as indicating a degree of harmoniousness with surroundings (e.g., a wall). That is, verification of the designability is conducted in the non-display mode. The observer determines the designability in a state where display unit 10 does not display a video.

Results of the verification of the designability are rated as "O", "△", and "×". The mark "○" indicates a designability with the mark is high. That is, the mark means that decorative sheet 20 can provide a desired appearance. The mark "△" indicates that a designability with the mark is low but at an acceptable level. That is, the mark means that decorative sheet 20 can provide the desired appearance (e.g., a desired degree of harmoniousness) to some degree. The marks "○" and "△" mean that the appearance of decorative sheet 20 is acceptable. The mark "×" indicates that a designability with the mark is low to an unacceptable level. That is, the mark means that decorative sheet 20 fails to provide a desired appearance (e.g., decorative sheet 20 is not harmonious with an object).

As illustrated in FIG. 5, for the display clarity, a haze value of decorative sheet 20 is preferably at most 86.3%, more preferably at most 72.0%. Further, for the designability, a haze value of decorative sheet 20 is preferably at least 28.4%, more preferably at least 57.0%. From the above, a haze value of decorative sheet 20 for establishing compatibility between the display clarity and the designability preferably ranges from 28.4% to 86.3%, inclusive, more preferably from 57.0% to 72.0%, inclusive. This makes it possible to ensure a high display clarity of display device 1 while preventing degradation in designability of display device 1.

It should be noted that even if the thickness of substrate 21 of decorative sheet 20 and the pattern of decorative layer 22 of decorative sheet 20 do not meet the respective conditions for display device 1 used for the verification, the same results as those illustrated in FIG. 5 are supposed to be given. That is, the results shown in FIG. 5 are supposed to be given irrespective of the thickness of substrate 21 and the pattern of decorative layer 22. For example, the above-described results apply to display device 1a illustrated in FIG. 4.

It should be noted that, of substrate 21 and decorative layer 22, decorative layer 22 significantly influences a haze value and a parallel beam transmittance of decorative sheet 20. Values of a haze value and a parallel beam transmittance of decorative layer 22 are therefore similar to those of a haze value and a parallel beam transmittance of decorative sheet 20. For example, the result of the verification shown in FIG. 5 can be regarded as indicating a relation between optical properties of decorative layer 22 and an appearance of display device 1.

In a case where an intermediate layer of display device 1 is a diffusion layer having a diffusibility or a case where a diffusion layer having a diffusibility is included between an intermediate layer and decorative sheet 20, a total haze value and a total parallel beam transmittance of the diffusion layer and decorative sheet 20 preferably fall within the respective ranges shown in FIG. 5. For example, a haze value that is calculated based on emitted light emitted from decorative sheet 20 with respect to parallel beams incident on the diffusion layer preferably falls within the range of haze value shown in FIG. 5.

In a case where decorative layer 22 is decorated in white, the haze value of decorative sheet 20 can be adjusted based on, for example, at least one of a concentration of white pigment to be dissolved in solvent for forming decorative layer 22 and the number of printed layers. In a case where decorative layer 22 is decorated with a pattern of a color other than white, the haze value can be adjusted based on, for example, at least one of a density of the pattern and widths of lines constituting the pattern. It should be noted that the haze value may be adjusted by a method other than the above-described method.

### [1-3. Application example]

Next, an application example of display device 1 described above will be described with reference to FIG. 6A and FIG. 6B. FIG. 6A is a diagram for describing the non-display mode of display device 1 according to the present embodiment in the application example. FIG. 6B is a diagram for describing the display mode of display device 1 according to the present embodiment in the application example. It should be noted that the application example to be described below is merely an example, and for example, an object for which display device 1 is used is not limited to the following object.

As illustrated in FIG. 6A and FIG. 6B, display device 1 may be installed being embedded in an electrical apparatus, which is an example of the object (e.g., a home appliance such as refrigerator 100). In this case, the electrical apparatus includes a body that has a recessed portion for housing display device 1 and display device 1 that is housed in the recessed portion. The recessed portion is a recessed portion used for embedding display device 1 into the electrical apparatus.

Refrigerator 100 has a monochromatic (e.g., white) color tone, for example. In this case, decorative sheet 20 is decorated in white. The white decoration is an example of being decorated suitably for the object. With this configuration, as illustrated in FIG. 6A, while controller 50 controls display unit 10 in the non-display mode, a user will visually recognize the white decoration formed on decorative sheet 20. That is, the appearance of display device 1 is harmonious with an appearance of refrigerator 100. This makes display device 1 in the non-display mode difficult to be visually recognized as being embedded into refrigerator 100.

Further, as illustrated in FIG. 6B, while controller 50 controls display unit 10 in the display mode, a user can visually recognize a video displayed by display unit 10. The user can visually recognize, for example, a clear video that is seen standing out from refrigerator 100. For example, by displaying a recipe or ingredients, display device 1 can assist a user in cooking.

### [1-4. Advantageous effects]

As described above, display device 1 according to Embodiment is to be attached to an object, and includes: display unit 10 that includes display surface 10a and displays video on display surface 10a; decorative layer 22 that is light-transmissive and disposed on display surface 10a side of display unit 10, decorative layer 22 being decorated according to an appearance of the object; and half-mirror layer 30 (example of an intermediate layer) that is light-transmissive and disposed between display unit 10 and decorative layer 22. Decorative layer 22 has a haze value (example of a first haze value) ranging from 28.4% to 86.3%, inclusive.

This enables display device 1 to provide a clear display with reduced blurring even with a configuration including decorative layer 22 because the haze value of decorative layer 22 ranges from 28% to 87%, inclusive. Display device 1 is therefore capable of preventing degradation in quality of an image displayed even in a case where display device 1 includes decorative layer 22.

Further, the intermediate layer includes at least one of half-mirror layer 30 and polarizing half-mirror layer 60.

This enables display device 1 to provide a pattern having a desired depth even when a depth of decorative layer 22 is lowered. Lowering the depth of decorative layer 22 can lower a diffusibility of decorative layer 22; therefore, it is possible to provide a clearer display with further reduced blurring.

The haze value of decorative layer 22 ranges from 57% to 72%, inclusive.

This enables display device 1 to provide an even clearer display with even further reduced blurring and to ensure a high designability.

In addition, a parallel beam transmittance of decorative layer 22 (an example of a first parallel beam transmittance) ranges from 7.5% to 56.1%, inclusive.

This enables display device 1 to provide a display having a brightness not less than a prescribed brightness in the display mode.

Further, the parallel beam transmittance of decorative layer 22 (an example of a first parallel beam transmittance) ranges from 17.4% to 29.2%, inclusive.

This enables display device 1 to provide a brighter display in the display mode.

### (Embodiment 2)

### [2-1. Configuration]

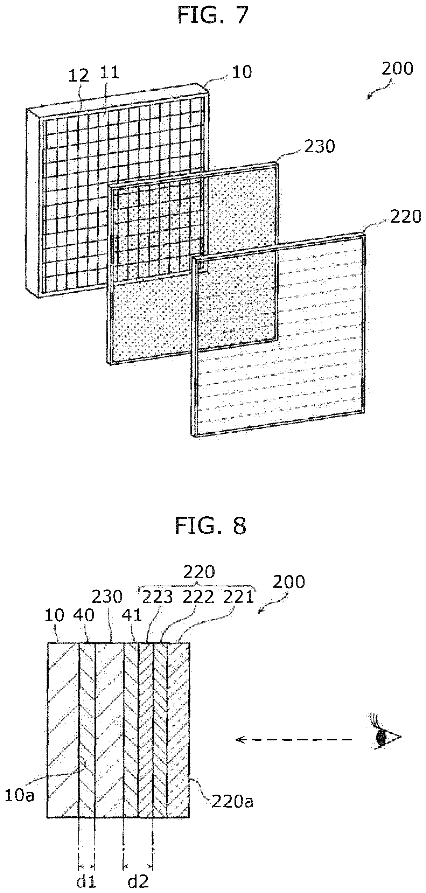

First, a configuration of display device 200 according to the present embodiment will be described with reference to FIG. 7 and FIG. 8. FIG. 7 is an exploded perspective view schematically illustrating an example of a schematic configuration of display device 200 according to the present embodiment. FIG. 8 is a cross-sectional view schematically illustrating a cross-sectional configuration of display device 200 according to the present embodiment. In display device 200 as illustrated in FIG. 7 and FIG. 8, a pixel arrangement of display unit 10 and a decorative pattern of decorative layer 222 may cause a moire pattern (interference pattern) to appear. Display device 200 according to the present embodiment is different from display device 1 according to Embodiment 1 in that display device 200 includes an intermediate layer (e.g., diffusion layer 230) for reducing the moire pattern caused to appear by display unit 10 and decorative layer 222. Specifically, display device 200 is different from display device 1 in mainly that the intermediate layer is diffusion layer 230, which has a predetermined haze value. Hereinafter, the difference from Embodiment 1 will be mainly described; the same components as those in Embodiment 1 will be given the same reference numeral as in Embodiment 1, and description thereof may be omitted or simplified.

As illustrated in FIG. 7, display device 200 according to the present embodiment includes decorative sheet 220 in place of decorative sheet 20 in Embodiment 1 and diffusion layer 230 in place of half-mirror layer 30 in Embodiment 1.

Decorative sheet 220 is provided so as to hide (conceal) display device 200 being embedded in the object. Decorative sheet 220 is light-transmissive, is disposed on the display surface 10a side of display unit 10, and is decorated, for example, according to an appearance of the object. The decoration is applied to the entire decorative sheet 220 but may be applied partly.

The decoration applied to decorative sheet 220 is preferably a decoration that makes display device 200 and an object appear integral in a state where display device 200 is embedded in the object, for example (e.g., display device 200 being installed is difficult to be visually recognized when display device 200 does not display a video). In addition, the decoration applied to decorative sheet 200, for example, is preferably a decoration that is harmonious with an interior of a room where the object is placed. For example, in a case where the object is a wall and where display device 200 is embedded in the wall, such decoration is preferably a decoration that makes display device 200 appear as the wall when the wall is seen with display unit 10 not displaying a video.

It should be noted that decorative sheet 220 may have a function of enhancing transmittance or visibility of display. Such a function may be implemented by regularly arranged holes provided in decorative sheet 220. The regularly arranged holes may be, for example, physical holes provided in substrate 221 (e.g., holes penetrating substrate 221) or may be, for example, portions of decorative layer 222 on which a decoration is not printed (non-printed portions). The regularly arranged holes are provided in a form of, for example, a plurality of holes disposed two-dimensionally. In this case, although display unit 10 and the regularly arranged holes cause a moire pattern to appear, display device 200 according to the present embodiment can reduce the appearance of such a moire pattern. It should be noted that decorative sheet 220 having the regularly arranged holes satisfies being formed with a regular pattern.

For example, decorative sheet 220 is disposed in the foreground of display device 200. A user visually recognizes decorative sheet 220 with display device 200 being embedded in the object.

As illustrated in FIG. 8, decorative sheet 220 includes substrate 221, decorative layer 222, and vapor-deposited layer 223.

**Substrate** 221 is a layer serving as a base of decorative sheet 220 and is formed from a light-transmissive resin material, a glass material, or the like. For example, substrate 221 is preferably transparent. In a case where substrate 221 is formed from such a resin material, substrate 221 may be formed from, for example, polyethylene terephthalate (PET), polycarbonate (PC), polymethyl methacrylate (PMMA/acrylic resin), or the like. A thickness of substrate 221 is not limited to a particular thickness but may be, for example, 2 mm.

Decorative layer 222 is a layer in which the regular pattern is provided. Examples of the regular pattern include a wood-grain tone, a hairline pattern (linear pattern), a dotted pattern, a gradation pattern, a check pattern, but the regular pattern may be any pattern as long as the pattern has regularity. Hereinafter, an example in which a hairline pattern is applied to decorative layer 222 will be described. Decorative layer 222 may be a hairline-finished decorative film. Further, decorative layer 222 may be formed by, for example, subjecting a back surface of substrate 221 to hairline finish.

It should be noted that optical properties of decorative sheet 220 may be, for example, within a range of the optical properties of decorative sheet 20 according to Embodiment 1. Specifically, a haze value and a parallel beam transmittance of decorative sheet 220 each may be any value within the range within which the value results in "○" or "△" in the verification shown in FIG. 5. For example, the haze value of decorative sheet 220 may range from 28.4% to 86.3%, inclusive, preferably from 57% to 72%, inclusive. For example, the parallel beam transmittance of decorative sheet 220 may range from 7.5% to 56.1%, inclusive, preferably from 17.4% to 29.2%, inclusive. It should be noted that the optical properties of decorative sheet 220 are not limited to the above.

Vapor-deposited layer 223 is, for example, a metal vapor-deposited layer for presenting a metallic tone. Vapor-deposited layer 223 is formed by, for example, being stacked on the back surface of substrate 221 subjected to the hairline finish. A metal constituting vapor-deposited layer 223 is not limited to a particular metal and may be, for example, aluminum. Vapor-deposited layer 223 is formed on substrate 221 by a well-known vapor deposition method such as a vacuum evaporation method.

Although decorative layer 222 is formed on a surface of substrate 221 on a display unit 10 side (back surface) in the present embodiment, this does not limit the formation of decorative layer 222; it is only required that decorative layer 222 be formed on at least one of the back surface of substrate 221 and a surface that is back-to-back with the back surface (e.g., front surface 220a).

Diffusion layer 230 is a layer that is provided between display unit 10 and decorative layer 222 and that is light-transmissive and has a diffusibility (optical diffusibility). Diffusion layer 230 is formed of, for example, a film that is subjected to diffusion treatment or a bonding layer containing an optical diffuser such as silica. Diffusion layer 230 may be, for example, an anti-glare (AG) film that is subjected to AG treatment to be capable of diffusing light received from display unit 10. Alternatively, diffusion layer 230 may be an anti-glare anti-reflection (AGAR) film that is subjected to AGAR treatment, from a viewpoint of preventing light from display unit 10 from being reflected off an interface between display unit 10 and diffusion layer 230, that is, the viewpoint of improving a transmittance of diffusion layer 230. Alternatively, diffusion layer 230 may be, for example, an OCA containing silica and the like. From a viewpoint of maintaining a clarity of a video further, diffusion layer 230 is preferably disposed closer to display unit 10 than to decorative layer 222 between display unit 10 and decorative layer 222. For example, diffusion layer 230 is preferably stuck directly to display unit 10 via bonding layer 40.

Diffusion layer 230 has a function of diffusing light received from display unit 10 and outputting the diffused light to decorative sheet 220. Diffusion layer 230 diffuses light having lattice shading that is attributable to a dot pitch (light including shading that has plane regularity) and outputs the diffused light to decorative sheet 220. In other words, decorative sheet 220 receives the light diffused by diffusion layer 230. A parallel beam transmittance and a haze value of diffusion layer 230 will be described later. It should be noted that the description will be given of an example in which diffusion layer 230 is formed of a single layer, but diffusion layer 230 may be formed of a plurality of layers (e.g., a plurality of AG films or a plurality of diffusion layers).

It should be noted that display device 200 according to the present embodiment may further have a function of enhancing transmittance or visibility of display. Such a function is implemented by, for example, an optical control part (not illustrated) that controls a direction of light received from display unit 10. The optical control part may be, for example, regularly arranged holes or may be regularly disposed wall portions for leading light received from display unit 10 to decorative sheet 220. The regularly arranged holes are provided in a form of, for example, a plurality of holes disposed two-dimensionally. The regularly disposed wall portions are provided in a form of, for example, a plurality of wall portions disposed two-dimensionally. For example, the optical control part is disposed between decorative sheet 220 and diffusion layer 230. In this case, although display unit 10 and the optical control part having regularity cause a moire pattern to appear, display device 200 according to the present embodiment can reduce the appearance of such a moire pattern. It should be noted that display device 200 including such an optical control part satisfies being provided with a regular pattern.

As described above, display device 200 is a display device to be attached to an object, and includes: display unit 10 that includes display surface 10a and displays a video on display surface 10a; decorative layer 222 that is light-transmissive and disposed on a display surface 10a side of display unit 10, decorative layer 222 being decorated according to an appearance of the object; and diffusion layer 230 that is light-transmissive and disposed between display unit 10 and decorative layer 222, diffusion layer 230 diffusing light received from display unit 10. Further, a haze value of decorative layer 222 may range from 28.4% to 86.3%, inclusive.

It should be noted that, with reference to FIG. 8, the description has been given of an example in which display device 200 does not include a half-mirror layer (e.g., half-mirror layer 30 in Embodiment 1), but display device 200 may include a half-mirror layer. For example, display device 200 may include a half-mirror layer in place of vapor-deposited layer 223 or in addition to the configuration illustrated in FIG. 8. The half-mirror layer is disposed between decorative layer 222 and diffusion layer 230. For example, display device 200 may include, between decorative layer 222 and diffusion layer 230, at least one of a half-mirror layer and a polarizing half-mirror layer. It should be noted that in a case where display device 200 includes a half-mirror layer in place of vapor-deposited layer 223, decorative sheet 220 includes substrate 221 and decorative layer 222. Further, in a case where display device 200 includes a half-mirror layer, the half-mirror layer and diffusion layer 230 constitute an intermediate layer. The intermediate layer is, for example, a layer disposed between display unit 10 and decorative layer 222; the intermediate layer may be constituted by a plurality of layers.

### [2-2. Relation between optical properties of diffusion layer and appearance of display device]

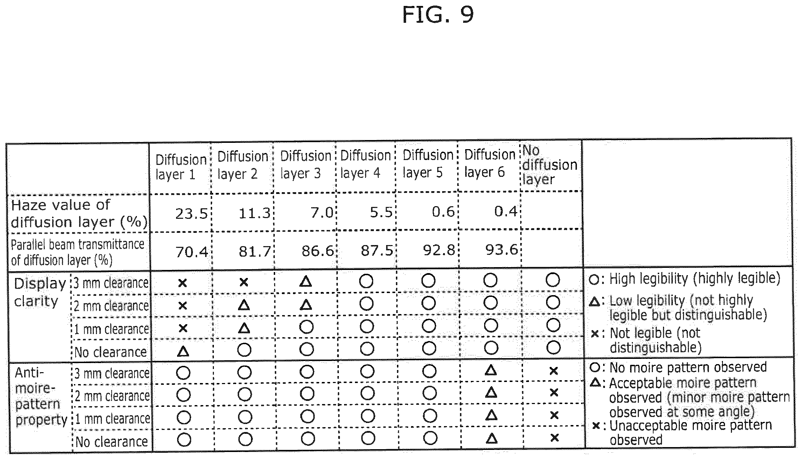

Next, results of verification of a relation between optical properties of diffusion layer 230 and an appearance of display device 200 will be described with reference to FIG. 9. FIG. 9 is a diagram illustrating the results of the verification for display device 200 according to the present embodiment. Specifically, FIG. 9 is a diagram illustrating results of verification of a relation between haze value and parallel beam transmittance of diffusion layer 230, and display clarity and anti-moire-pattern property.

First, conditions for the verification of the relation between optical properties of diffusion layer 230 and the appearance of display device 1 will be described. It should be noted that the description about the conditions will be given mainly of regards in which the conditions are different from the conditions in Embodiment 1. Decorative sheet 220 of display device 200 used for the verification includes decorative layer 222 that is a hairline-finished decorative film and diffusion layer 230 that includes at least one of an AG film or an AGAR film. Substrate 221 of decorative sheet 220 has a thickness of 2 mm, and decorative layer 222 is stuck to a back surface of substrate 221. Diffusion layer 230 is disposed on (being in contact with) decorative layer 222.

The verification of the display clarity and the anti-moire-pattern property is conducted in the display mode. An observer checks the bar display and the character display to determine whether the displays are clear (whether the displays are not blurred) and to determine a degree of appearance of a moire pattern.

It should be noted that FIG. 9 shows results of verification for cases where diffusion layer 1 to diffusion layer 6 that have haze values different from one another and that have parallel beam transmittances different from one another and for a case where diffusion layer 230 is not included (shown as "No diffusion layer" in FIG. 9). The haze values and the parallel beam transmittances of diffusion layer 1 to diffusion layer 6 are adjusted by sticking together a plurality of types of AG films or AGAR films that have haze values different from one another and that have parallel beam transmittances different from one another.

Parallel beam transmittances shown in FIG. 9 are each a parallel beam transmittance of diffusion layer 230. The parallel beam transmittances each indicate, for example, a ratio of light emitted in a direction perpendicular to a surface of diffusion layer 230 to light incident on diffusion layer 230. In other words, the parallel beam transmittances each indicate, for example, a ratio of light passing through diffusion layer 230 and not diffused within diffusion layer 230 to light incident on diffusion layer 230. The parallel beam transmittances serve as an index that indicates a brightness of a video displayed by display device 200. The haze values in the figure each indicate a haze value of diffusion layer 230.

A method for the verification and results of the verification of the display clarity are the same as in Embodiment 1, and description thereof will be omitted; however, the verification is conducted for each of clearances described later.

The anti-moire-pattern property indicates an appearance of display device 200 when display device 200 operates in the display mode. The anti-moire-pattern property can be regarded as indicating a degree of appearance of a moire pattern in the display. That is, verification of the anti-moire-pattern property is conducted in the display mode. Display unit 10 displays a bar display (video) in which color bars are displayed against a white background and displays a character display in which black characters from 8 point to 20 point are displayed. For example, conditions for the character display such as sizes of the characters may be determined based on JIS S 0032 (Estimation of minimum legible size for a Japanese single character). The observer checks the bar display and the character display and determines whether the displays are clear (whether the displays are not blurred). Further, in the verification of the anti-moire-pattern property, a verification of whether a moire pattern does not appear at any bias angle by rotating decorative layer 222 with respect to display unit 10 about an optical axis of display device 200 (an axis parallel to a direction in which display unit 10, diffusion layer 230, and decorative sheet 220 are arranged (stacking direction)).

Results of the verification of the anti-moire-pattern property are rated as "○", "△", and "×". The mark "○" means that a moire pattern does not appear at any angle. The mark "△" indicates that although a moire pattern is recognized with some angle, but the moire pattern is feeble and is practically at a level considered unproblematic (at an acceptable level). The marks "○" and "△" means that the appearance of decorative sheet 20 is acceptable. The mark "×" indicates that a strong moire pattern appears and is not at the acceptable level.

The verification by the observer is conducted for each of clearances that are distances between display unit 10 and decorative layer 222 excluding a thickness of diffusion layer 230. That is, the verification by the observer is conducted with various clearances between display unit 10 and decorative layer 222. Specifically, the verification is conducted with clearances having distances "no clearance" (0 mm), "1 mm", "2 mm", and "3 mm". The clearances are, in the example in FIG. 8 for example, each a total thickness (length) of thickness d1 of bonding layer 40 and thickness d2 of bonding layer 41 and vapor-deposited layer 223. It is noted that the clearances each include an air space. "No clearance" means that diffusion layer 230 is a diffusive-adhesive layer having adhesiveness for causing display unit 10 and decorative layer 222 to adhere to respective opposite surfaces of diffusion layer 230 in order to stick display unit 10 and decorative layer 222 together. Thickness d2 need not include a thickness of vapor-deposited layer 223. In other words, the clearances each may be a total thickness (length) of thicknesses of bonding layers 40 and 41 and a thickness of the air space. It is noted that diffusion layer 230 may be disposed at any position between display unit 10 and decorative layer 222.

First, a case of "no clearance" will be described. In this case, as illustrated in FIG. 9, for the display clarity, a haze value of diffusion layer 230 is preferably at most 23.5%, more preferably at most 11.3%. In this case, a parallel beam transmittance of diffusion layer 230 is preferably at least 70.4%, more preferably at least 81.7%.

Next, a case of the clearance "1 mm" will be described. In this case, as illustrated in FIG. 9, for the display clarity, a haze value of diffusion layer 230 is preferably at most 11.3%, more preferably at most 7.0%. In this case, a parallel beam transmittance of diffusion layer 230 is preferably at least 81.7%, more preferably at least 86.6%.

Next, a case of the clearance "2 mm" will be described. In this case, as illustrated in FIG. 9, for the display clarity, a haze value of diffusion layer 230 is preferably at most 11.3%, more preferably at most 5.5%. In this case, a parallel beam transmittance of diffusion layer 230 is preferably at least 81.7%, more preferably at least 87.5%.

Next, a case of the clearance "3 mm" will be described. In this case, as illustrated in FIG. 9, for the display clarity, a haze value of diffusion layer 230 is preferably at most 7.0%, more preferably at most 5.5%. In this case, a parallel beam transmittance of diffusion layer 230 is preferably at least 86.6%, more preferably at least 87.5%.

For the anti-moire-pattern property, it is only required that a haze value of diffusion layer 230 be at least 0.4%, more preferably at least 0.6%, irrespective of the clearances.

From the above, in the case of "no clearance", a haze value of diffusion layer 230 for establishing compatibility between the display clarity and the anti-moire-pattern property preferably ranges from 0.4% to 23.5%, inclusive, more preferably from 0.6% to 11.3%, inclusive. In the case of the clearance "1 mm", a haze value of diffusion layer 230 for establishing compatibility between the display clarity and the anti-moire-pattern property preferably ranges from 0.4% to 11.3%, inclusive, more preferably from 0.6% to 7.0%, inclusive. In the case of the clearance "2 mm", a haze value of diffusion layer 230 for establishing compatibility between the display clarity and the anti-moire-pattern property preferably ranges from 0.4% to 11.3%, inclusive, more preferably from 0.6% to 5.5%, inclusive. In the case of the clearance "3 mm", a haze value of diffusion layer 230 for establishing compatibility between the display clarity and the anti-moire-pattern property preferably ranges from 0.4% to 7.0%, inclusive, more preferably from 0.6% to 5.5%, inclusive.

This makes it possible to ensure a high display clarity of display device 200 while preventing a moire pattern from appearing on display device 200.

Further, from the above, in the case of "no clearance", a parallel beam transmittance for providing a high display clarity is preferably at least 70.4%, more preferably at least 81.7%. In the case of the clearance "1 mm", a parallel beam transmittance for providing a high display clarity is preferably at least 81.7%, more preferably at least 86.6%. In the case of the clearance "2 mm", a parallel beam transmittance for providing a high display clarity is preferably at least 81.7%, more preferably at least 87.5%. In the case of the clearance "3 mm", a parallel beam transmittance for providing a high display clarity is preferably at least 86.6%, more preferably at least 87.5%.

This enables display device 200 to display a brighter video and thus to improve the display clarity.

### [2-3. Application example]

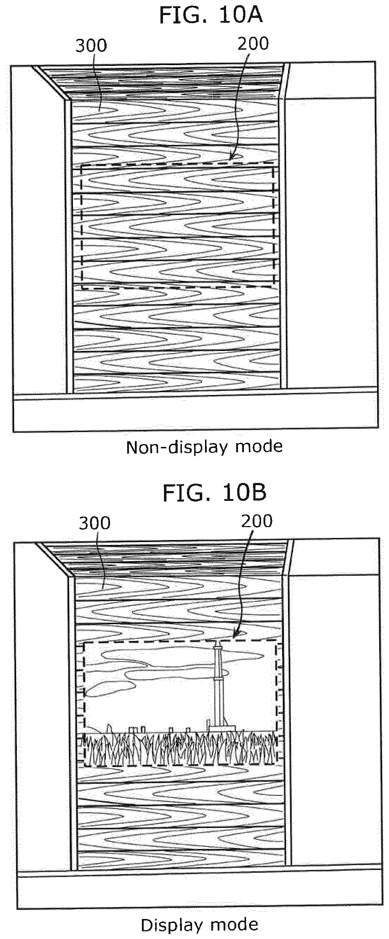

Next, an application example of display device 200 described above will be described with reference to FIG. 10A and FIG. 10B. FIG. 10A is a diagram for describing the non-display mode of display device 200 according to the present embodiment in the application example. FIG. 10B is a diagram for describing the display mode of display device 200 according to the present embodiment in the application example. It should be noted that the application example to be described below is merely an example, and an object for which display device 200 is used is not limited to the following object.

As illustrated in FIG. 10A and FIG. 10B, display device 200 may be installed being housed in a building material, which is an example of the object (e.g., wall 300). In this case, the building material includes a body that has a recessed portion for housing display device 200 and display device 200 that is housed in the recessed portion. The recessed portion is a recessed portion used for embedding display device 200 into the building material.

Wall 300 has, for example, a wood-grain pattern. In this case, decorative sheet 220 is decorated in a wood-grain tone. The decoration of the wood-grain tone is an example of being decorated suitably for the object. With this configuration, as illustrated in FIG. 10A, while controller 50 controls display unit 10 in the non-display mode, a user will visually recognize the decoration of the wood-grain tone formed on decorative sheet 220. That is, the appearance of display device 200 is harmonious with an appearance of wall 300. This makes display device 200 difficult to be visually recognized as being embedded into wall 300. In other words, decorative sheet 220 can prevent display device 200 from being seen.

Further, as illustrated in FIG. 10B, while controller 50 controls display unit 10 in the display mode, a user can visually recognize a video displayed by display unit 10. The user can visually recognize, for example, a clear video that is seen standing out from wall 300 and in which appearance of a moire pattern is prevented.

### [2-4. Advantageous effects]

As described above, the intermediate layer of display device 200 according to the present embodiment is diffusion layer 230 that diffuses light received from display unit 10, the clearance (an example of a distance) between decorative layer 222 and display unit 10 is at most 3 mm, and diffusion layer 230 has a haze value ranging from 0.4% to 7.0%, inclusive. Further, the intermediate layer is diffusion layer 230 that diffuses light received from display unit 10, the distance between decorative layer 222 and display unit 10 is at most 2 mm, and diffusion layer 230 has a haze value (an example of a second haze value) ranging from 0.4% to 11.3%, inclusive. Further, the intermediate layer is diffusion layer 230 diffusing light received from display unit 10 and has an adhesiveness for causing display unit 10 and decorative layer 222 to adhere to respective opposite surfaces of diffusion layer 230 in order to stick display unit 10 and decorative layer 222 together. In addition, the haze value of diffusion layer 230 ranges from 0.4% to 23.5%, inclusive.

These enable display device 200 to prevent a moire pattern that is caused to appear by a decorative pattern of decorative layer 222 and display unit 10, while preventing degradation in clarity of display (occurrence of blurring). Display device 200, which includes decorative layer 222, is therefore capable of preventing degradation in quality of an image displayed.

Further, the haze value of diffusion layer 230 ranges from 0.6% to 7.0%, inclusive.

This enables display device 200 to further prevent the degradation in quality of an image displayed.

Further, diffusion layer 230 has a parallel beam transmittance (an example of a second parallel beam transmittance) of at least 70.4%.

This enables display device 200 to provide a display having a desired brightness in the display mode.

Further, the parallel beam transmittance of diffusion layer 230 is at least 87.5%.

This enables display device 200 to provide a brighter display in the display mode.

Further, display device 200 further includes at least one of a half-mirror layer and a polarizing half-mirror layer (e.g., half-mirror layer 30 according to Embodiment 1), the at least one of the half-mirror layer and the polarizing half-mirror layer being disposed between diffusion layer 230 and decorative layer 222.

Since diffusion layer 230 is disposed at a position close to display unit 10, this enables display device 200 to prevent a video from being blurred and prevent a moire pattern from appearing while keeping a high clarity of the video. In addition, since display device 200 includes the half-mirror layer, it is possible to set a high transmittance to decorative layer 222. That is, display device 200 is capable of displaying a video of a high luminance value. Display device 200 is therefore capable of further preventing the degradation in quality of an image displayed.

### (Other Embodiments)

The display devices according to embodiments have been described above based on the embodiments; however, the present disclosure is not limited to the embodiments and the like.

The components illustrated in the accompanying drawings or described in the detailed descriptions may therefore include not only components that are essential to solving the problem but also components that are not essential to solving the problem but are provided to describe the technique described above. Therefore, the non-essential components should not be construed as being essential just because the non-essential components are illustrated in the accompanying drawings or described in the detailed descriptions.

For example, the descriptions of the above-described embodiments have been given of the configuration in which the display device includes the decorative sheet; however, the display device is not limited to this configuration. It is only required that the display device include the display unit, the intermediate layer, and the decorative layer. For example, the decorative layer may be provided integrally with the intermediate layer. In this case, the decorative layer may be disposed on a surface of a substrate included in the intermediate layer, the surface being on a front side of the display device.

The descriptions of the above-described embodiments have been given of an example in which the intermediate layer (e.g., the half-mirror layer, the diffusion layer, etc.) does not change in its optical state; however, the intermediate layer is not limited to this. For example, the intermediate layer may have a configuration in which its optical state is changed by an application of a voltage. The intermediate layer may have a configuration in which, for example, an application of a voltage brings the intermediate layer into a first state in which the intermediate layer has a high optical reflectivity or a high optical diffusibility and decreasing the applied voltage brings the intermediate layer into a second state in which the intermediate layer has an optical reflectivity or an optical diffusibility that is lower than in the first state.

The descriptions of the above-described embodiments have been given of a case where the haze value is a haze value of the decorative sheet (e.g., the decorative layer and the substrate); however, the haze value may be a haze value of the decorative layer alone. That is, the above-described haze value may be a value that indicates a degree of diffusion of light that is incident on the decorative layer and emitted from the decorative layer (light of a video).

The descriptions of the above-described embodiments have been given of a case where the parallel beam transmittance is a parallel beam transmittance of the decorative sheet (e.g., the decorative layer and the substrate); however, the parallel beam transmittance may be a parallel beam transmittance of the decorative layer alone. That is, the above-described parallel beam transmittance may indicate a parallel beam transmittance for light that is incident on the decorative layer and emitted from the decorative layer (light of a video).

The descriptions of the above-described embodiments have been given of an example in which the display device is disposed with at least a part of the display device being embedded into the object; however, the disposition is not limited to the embedded disposition. For example, the display device may be fixed on a surface of an object. For example, the display device may be stuck on a surface of an object.

The video displayed by the display unit in the above-described embodiments is not limited to a particular video; the video may be a television image (e.g., a television image of 4K resolution) or may be an icon display or a segment display (e.g., a seven-segment display).

The description of Embodiment 2 described above has been given of an example in which the diffusion layer is disposed between the display unit and the half-mirror layer; however, the disposition of the diffusion layer is not limited to this, and the diffusion layer may be disposed between the half-mirror layer and the decorative layer. It should be noted that the diffusion layer is preferably disposed at a position close to the display unit and preferably disposed between the display unit and the half-mirror layer from a viewpoint of maintaining a high clarity of a video.

the present disclosure may include embodiments obtained by making various modifications on the above embodiments which those skilled in the art will arrive at, or embodiments obtained by selectively combining the elements and functions disclosed in the above embodiments, without materially departing from the scope of the present disclosure.

### [INDUSTRIAL APPLICABILITY]

The present disclosure is applicable to a display device to be attached to an object.

### [Reference Signs List]

- 1, 1a, 200: display device
- 10: display unit
- 10a: display surface
- 11: display region
- 12: periphery region
- 20, 220: decorative sheet
- 20a, 220a: front surface
- 21, 221: substrate
- 22, 222: decorative layer
- 30: half-mirror layer (intermediate layer)
- 40, 41: bonding layer
- 50: controller
- 60: polarizing half-mirror layer (intermediate layer)
- 100: refrigerator (object)
- 223: vapor-deposited layer
- 230: diffusion layer (intermediate layer)
- 300: wall (object)
- d1, d2: thickness

## Claims

1. A display device to be attached to an object, the display device comprising:
a display unit that includes a display surface and displays video on the display surface;
a decorative layer that is light-transmissive and disposed on a display surface side of the display unit, the decorative layer being decorated according to an appearance of the object; and
an intermediate layer that is light-transmissive and disposed between the display unit and the decorative layer, wherein
the decorative layer has a first haze value ranging from 28.4% to 86.3%, inclusive.

2. The display device according to claim 1, wherein
the intermediate layer includes at least one of a half-mirror layer or a polarizing half-mirror layer.

3. The display device according to claim 1, wherein
the intermediate layer is a diffusion layer that diffuses light received from the display unit,
a distance between the decorative layer and the display unit is at most 3 mm, and
the diffusion layer has a second haze value ranging from 0.4% to 7.0%, inclusive.

4. The display device according to claim 1, wherein
the intermediate layer is a diffusion layer that diffuses light received from the display unit,
a distance between the decorative layer and the display unit is at most 2 mm, and
the diffusion layer has a second haze value ranging from 0.4% to 11.3%, inclusive.

5. The display device according to claim 1, wherein
the intermediate layer is a diffusion layer diffusing light received from the display unit, the diffusion layer having an adhesiveness for causing the display unit and the decorative layer to adhere to respective opposite surfaces of the intermediate layer, and
the diffusion layer has a second haze value ranging from 0.4% to 23.5%, inclusive.

6. The display device according to any one of claims 3 to 5, wherein
the second haze value ranges from 0.6% to 7.0%, inclusive.

7. The display device according to any one of claims 3 to 6, wherein
the diffusion layer has a second parallel beam transmittance of at least 70.4%.

8. The display device according to claim 7, wherein
the second parallel beam transmittance is at least 87.5%.

9. The display device according to any one of claims 3 to 8, further comprising
at least one of a half-mirror layer or a polarizing half-mirror layer, the at least one of the half-mirror layer or the polarizing half-mirror layer being disposed between the diffusion layer and the decorative layer.

10. The display device according to any one of claims 1 to 9, wherein
the first haze value ranges from 57% to 72%, inclusive.

11. The display device according to any one of claims 1 to 10, wherein
the decorative layer has a first parallel beam transmittance ranging from 7.5% to 56.1%, inclusive.

12. The display device according to claim 11, wherein
the first parallel beam transmittance ranges from 17.4% to 29.2%, inclusive.
